# EUROPEAN PATENT APPLICATION

(11) **EP 1 689 136 A1**
(43) Date of publication of application: **09.08.2006**
(21) Application number: 05100761.5
(22) Date of filing: 04.02.2005
(51) Int. Cl.: H04L 12/58

(54) **Adaptive electronic message forwarding for wireless device**

(71) Applicant: Research In Motion Limited, Waterloo, Ontario N2L 3W8 (CA)
(72) Inventor: Fahmy, Samer, Waterloo, Ontario N2L 3P8 (CA)
(74) Representative: Rickard, David John

(57) **Abstract**

A system and method for forwarding electronic messages (24) to a wireless device (22) that involves modifying one or more non-textual elements within the electronic message (24) so as to adapt the message to the display capabilities of the wireless device (22). A gateway (12) determines if the electronic message (24) contains a non-textual element and it may modify the non-textual element so as to enable the wireless device (22) to display the modified element; for example, it may scale-down a graphic. The modified non-textual element is reinserted in the electronic message (24) and the formatted electronic message (26) is then forwarded to the wireless device (22) over a wireless network (20).

## Description

### FIELD OF TECHNOLOGY

The invention relates generally to a wireless device for reading electronic messages and, in particular, to a system and method for adapting an electronic message for rendering by a wireless device.

### BACKGROUND INFORMATION

Wireless devices are increasingly being used for communication of electronic messages, such as e-mail. Existing devices function well in receiving and displaying text-based messages; however, electronic messages increasingly feature non-textual elements. For example, e-mail may incorporate graphic logos, image files, and other non-text elements.

Many electronic messages, like e-mail, are formatted with the expectation that they will be rendered and viewed on a conventional computer display screen. The resolution and capabilities of a display on a typical wireless device differ from conventional computer display screen characteristics. These limitations cause problems for wireless devices when they try to render non-textual elements contained in electronic messages.

It would be advantageous to provide a system and/or method for addressing, at least in part, the problem with rendering non-textual elements on a wireless device. It would also be advantageous if the system and/or method took into account the fact that a wireless device often has a limited processing capacity and communication bandwidth.

### BRIEF SUMMARY

The present application describes a system and method for forwarding electronic messages to a wireless device that involves modifying one or more non-textual elements within the electronic message so as to adapt the message to the display capabilities of the wireless device. A gateway determines if the electronic message contains a non-textual element and it may modify the non-textual element so as to enable the wireless device to display the modified element; for example, it may scale-down a graphic. The modified non-textual element is reinserted in the electronic message and the formatted electronic message is then forwarded to the wireless device over a wireless network.

In one aspect, the present application provides a method of forwarding an electronic message from a gateway to a wireless device through a wireless network. The method includes a step of receiving the electronic message addressed to the wireless device, wherein the electronic message includes at least one non-textual element. It also includes a step of modifying the electronic message in accordance with display capabilities of the wireless device to create a formatted electronic message, the formatted electronic message including the non-textual element. A further step is forwarding the formatted electronic message to the wireless device over the wireless network.

In another aspect, the present application provides a system for forwarding an electronic message to a wireless device through a wireless network. The electronic message is addressed to the wireless device. The system includes a gateway, including a controller and a formatting module. The controller is for receiving the electronic message and for identifying that the electronic message includes at least one non-textual element. The formatting module is for modifying the electronic message in accordance with display capabilities of the wireless device to create a formatted electronic message, wherein the formatted electronic message includes the non-textual element. The gateway then forwards the formatted electronic message to the wireless device over the wireless network.

Other aspects and features of the present application will be apparent to one of ordinary skill in the art in light of the following detailed description and drawings depicting one or more embodiments.

### BRIEF DESCRIPTION OF THE DRAWINGS

Embodiments will now be described, by way of example only, with reference to the attached Figures, wherein:

Figure 1 is a block diagram of a system for forwarding electronic messages to a wireless device; and

Figure 2 shows, in flowchart form, a method of forwarding an electronic message from a gateway to a wireless device.

Like reference numerals are used throughout the Figures to denote similar elements and features.

### DETAILED DESCRIPTION

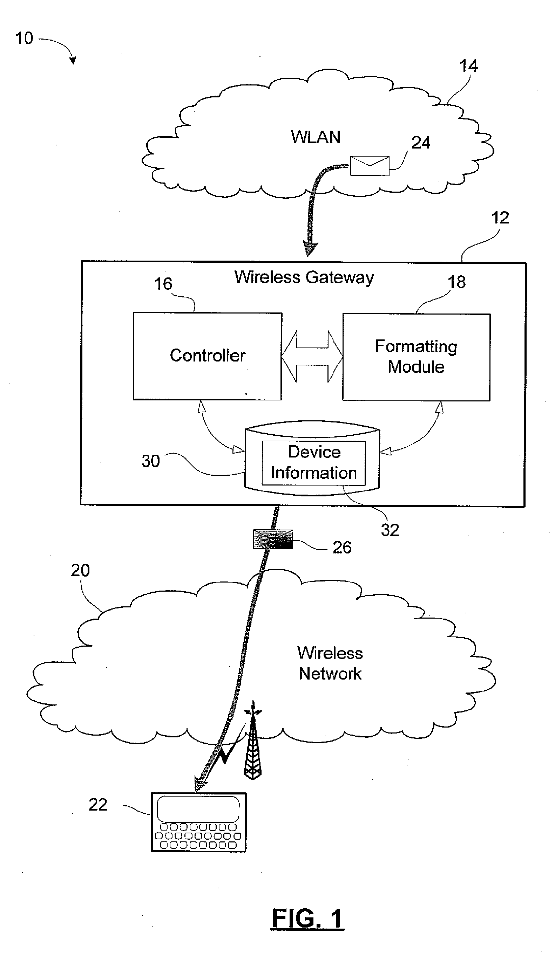

Referring now to the drawings, Figure 1 is a block diagram of a system 10 for forwarding electronic messages to a wireless device. The system 10 may include a plurality of wireless devices, such as wireless device 22 shown in Figure 1, which may be any type of wireless mobile electronic communications device such as a cell phone, a smart phone, a personal data assistant (PDA), a pager, a handheld computer or a laptop computer, to name a few. As is known, each wireless device 22 may be provided with various applications, including, without limitation, one electronic messaging application for at least receiving and displaying electronic messages. The electronic messaging application may, for example, comprise an email application, a short message service (SMS) application, a multimedia messaging service (MMS) application, an enhanced message service (EMS) application, and/or other Internet-enabled messaging applications. The term "application" as used herein shall include one or more programs, routines, subroutines, function calls or other type of software or firmware and the like, alone or in combination.

System 10 also includes a wireless network 20, which may be any wireless communications network or combination of interconnected networks, including, without limitation, Mobiltex™, DataTAC™, AMPS, TDMA, CDMA, GSM/GPRS, PCS, EDGE, UMTS or CDPD. As is known, wireless network 20 includes a plurality of base stations that perform radio frequency (RF) protocols to support data and/or voice exchanges with wireless devices 22.

A wireless gateway 12 is coupled to the wireless network 20 to interface the wireless network 20 to a wide area network (WAN) 14, such as the Internet. Among its functions, the wireless gateway 12 forwards electronic messages received through the WAN 14 and addressed to the wireless device 22. In some embodiments, the WAN 14 is coupled to a LAN (not shown) having an electronic messaging exchange server and redirection software for redirecting to the wireless device 22 any incoming messages addressed to a particular recipient. Such a system is described in commonly-owned US Patent no. 6,219,694 to Lazaridis et al., the contents of which are incorporated herein.

The wireless gateway 12 includes a controller 16 and a formatting module 18. The controller 16 manages the receipt and forwarding of electronic messages to the wireless device 22. It will be understood that in some embodiments the controller 16 may perform other functions, including receiving and forwarding outgoing electronic messages from the wireless device 22, tracking the wireless device 22 as it roams the wireless network 20, or other communications-related functions.

The controller 16 reads at least a portion of an incoming electronic message 24 to determine whether the message is of a type that requires formatting in order to display correctly on the wireless device 22. If the controller 16 determines that there are aspects of the electronic message 24 that require formatting, then it invokes or calls the formatting module 18. The formatting module 18 reformats certain elements of the electronic message 24 so as to facilitate the display of those elements on the wireless device 22. A formatted electronic message 26 is then forwarded to the wireless device 22 over the wireless network 20.

Electronic messages may come in a number of formats, including plain text format, rich text format (RTF), and hyper-text markup language (HTML) format. With plain text format, the message is made up of only text-based elements. No reformatting is typically required with respect to plain text electronic messages since the wireless device 22 is capable of displaying this type of element. RTF and HTML format messages may include a number of non-textual elements in addition to text elements. The non-textual elements that may make up the content of a RTF or HTML electronic message may include text-format elements like colour, font type, size, etc. They may also include layout information, graphics elements, object elements like Java elements, and other non-text elements. Those of ordinary skill in the art will appreciate the range and type of non-textual elements that may be included in an electronic message.

Many electronic messages 24 are designed to be rendered and viewed on a conventional personal computer monitor or screen. Typical computer video screens have resolutions of 640 x 480, 800 x 600, or 1024 x 768.

The resolution of the screen on the wireless device 22 may be smaller than a typical computer video screen. It may have other display characteristics or capabilities, including screen size or resolution, that limit its capacity to display full graphics or images. For example, it may only be capable of rendering images in a relatively few number of colours.

The wireless gateway 12 includes a memory 30 which stores information regarding the wireless device 22. In particular, the wireless gateway 12 stores device information 32 regarding the display characteristics or capabilities of the wireless device 22. The device information 32 may specify the device type or class, *i*.*e*. a model or version code, in association with which the wireless gateway 12 stores display characteristics. The display characteristics associated with the wireless device 22 assist the controller 16 and formatting module 18 to determine whether and how to reformat an incoming electronic message 24.

In one embodiment, the wireless device 22 may be incapable of displaying complex non-textual elements. For example, the wireless device 22 may not be capable of rendering HTML elements or graphic images such as JPEG of GIF files. In these circumstances, the controller 16 may strip this content out of the incoming electronic message 24 and forward an edited electronic message to the wireless device 22. The wireless device 22 will therefore only receive a text-based version of the electronic message 24. The non-textual elements may be discarded by the controller 16.

In another embodiment, the wireless device 22 may be capable of rendering non-textual elements, like HTML elements, but has particular display characteristics, such as a smaller screen resolution, that make rendering non-textual elements more challenging. Given the limited processing power that may be associated with the wireless device 22 and the limited bandwidth that may be available over the wireless network 20, it may be wasteful to send the full electronic message 24 to the wireless device 22 and have the wireless device 22 manage the reformatting of the message for proper display. Accordingly, the formatting module 18 formats one or more of the non-textual elements within the incoming electronic message 24 and generates a formatted electronic message 26 containing the reformatted non-textual element. The formatted electronic message 26 is then forwarded to the wireless device 22.

The formatting operations performed by the formatting module 18 may include extracting non-textual elements from the electronic message 24 and compressing, scaling, or otherwise modifying the non-textual elements so as to adapt them to the display characteristics of the wireless device 22. For example, with an image file, like a JPEG file, the formatting module 18 may scale the image down to a smaller size and re-insert the smaller image file as part of the formatted electronic message 26.

Those of ordinary skill in the art will appreciate that although the formatting module 18 is shown as a part of the wireless gateway 12 it may be provided on a separate server or computer to which the wireless gateway 12 is connected, provided the controller 16 is able to invoke or call the formatting module 18 in order to format incoming messages as described herein.

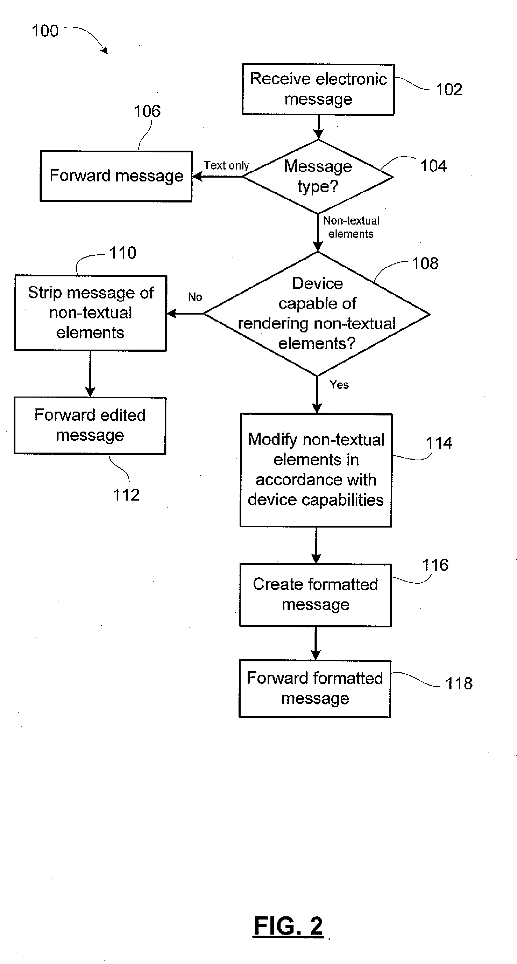

Reference is now made to Figure 2, which shows, in flowchart form, a method 100 of forwarding an electronic message from a gateway to a wireless device. The method 100 begins in step 102 when the gateway receives the incoming electronic message. In step 104, the type of message is identified, for example by reading a message type identifier. In some embodiments, the header of the electronic message may include a message type identifier. In one embodiment, the electronic message is read to identify if it contains non-textual elements. For example, an e-mail may contain various parts each having a content type. The gateway may read the content type associated with each part of the message to determine whether it is a content type that the device is capable of rendering without modification.

If the incoming electronic message is a plain text message, *i*.*e*. if it does not contain non-textual elements, then the method 100 proceeds to step 106 wherein the incoming electronic message is forwarded to the wireless device over the wireless network. If the message is not a plain text message, *i.e.* if it contains non-textual elements, then the method 100 continues in step 108.

In step 108, a determination is made as to whether the wireless device is capable of rendering non-textual elements. This determination may be made based upon stored device display characteristics or capabilities. If the wireless device is incapable of rendering non-textual elements, then the non-textual elements are stripped from the electronic message in step 110. This results in an edited electronic message which is forwarded to the wireless device in step 112.

If, in step 108, it is determined that the wireless device is capable of rendering non-textual elements, then the method 100 continues in step 114, wherein at least one of the non-textual elements is modified in accordance with the device display characteristics. For example, a graphic image may be scaled or the layout specifications may be adapted to the smaller screen size of the wireless device. In step 116, a formatted message is created, for example by inserting these modified elements in the original electronic message in place of the original elements. The formatted electronic message contains at least one modified non-textual element that has been altered based upon the device display characteristics. In step 118, the formatted message is forwarded to the wireless device.

The wireless device may include a browser and/or other application programs that enable it to render non-textual elements, such as HTML elements and/or image files, contained within electronic messages.

Those of ordinary skill in the art will appreciate that some of the steps of the foregoing method 100 may be performed contemporaneously or in an alternative order without materially affecting the operation of the method 100. The method 100 may be implemented through a combination of hardware and software.

The above-described embodiments of the present application are intended to be examples only. Alterations, modifications and variations may be effected to the particular embodiments by those skilled in the art without departing from the scope of the application, which is defined by the claims appended hereto.

## Claims

1. A method of forwarding an electronic message (24) from a gateway (12) to a wireless device (22) through a wireless network (20), the method comprising the steps of:
receiving the electronic message (24) addressed to the wireless device (22), wherein the electronic message (24) includes at least one non-textual element;
**characterised in that** the method includes the steps of,
modifying the electronic message (24) in accordance with display capabilities of the wireless device to create a formatted electronic message (26), said formatted electronic message (26) including said non-textual element; and
forwarding said formatted electronic message (26) to the wireless device (22) over the wireless network (20).

2. The method claimed in claim 1, **characterised in that** said step of modifying includes modifying said non-textual element based upon said display capabilities to create a modified non-textual element, and wherein said formatted electronic message (26) includes said modified non-textual element.

3. The method claimed in claim 2, **characterised in that** said step of modifying said non-textual element includes scaling said non-textual element to reduce its display size and permit display of said modified non-textual element on the wireless device (22).

4. The method claimed in any of claims 1 to 3, **characterised in that** said non-textual element includes an image file.

5. The method claimed in any preceding claim, **characterised in that** said display capabilities include screen resolution, and wherein said step of modifying includes scaling said non-textual element in accordance with said screen resolution.

6. The method claimed in any preceding claim, **characterised in that** the method further includes a step of identifying that the electronic message (24) includes said non-textual element, wherein said step of identifying includes reading a message type identifier.

7. The method claimed in any of claims 1 to 6, **characterised in that** the electronic message (24) comprises e-mail, and wherein said e-mail comprises HTML or RTF format e-mail.

8. The method claimed in any preceding claim, **characterised in that** said step of receiving includes determining whether the electronic message (24) includes said at least one non-textual element.

9. The method claimed in any preceding claim, **characterised in that** the method further includes a step of storing said display characteristics associated with the wireless device (22).

10. The method claimed in any preceding claim, **characterised in that** the method further includes a step of storing a device type associated with the wireless device (22) and determining said display characteristics based upon said device type.

11. A gateway for forwarding an electronic message (24) to a wireless device (22) through a wireless network (20), wherein the electronic message (24) is addressed to the wireless device (22), **characterized in that** the gateway comprises:
a controller (16) for receiving the electronic message (24) and for identifying that the electronic message (24) includes at least one non-textual element; and
a formatting module (18) for modifying the electronic message (24) in accordance with display capabilities of the wireless device (22) to create a formatted electronic message (26), said formatted electronic message (26) including said non-textual element,
wherein said gateway (12) includes means for forwarding said formatted electronic message (26) to the wireless device (22) over the wireless network (20).

12. The gateway claimed in claim 11, **characterised in that** said gateway (12) stores information regarding said display capabilities associated with the wireless device (22), wherein said formatting module (18) includes a component for modifying said non-textual element based upon said display capabilities, and wherein said formatted electronic message (26) includes said modified non-textual element.

13. The gateway claimed in claim 12, **characterised in that** said component for modifying includes a component for scaling said non-textual element to reduce its display size and permit display of said modified non-textual element on the wireless device (22).

14. The gateway claimed in any of claims 11 to 13, **characterised in that** said non-textual element includes an image file.

15. The gateway claimed in any one of claims 12 to 14, **characterised in that** said gateway (12) stores a device type associated with the wireless device (22) and wherein said information regarding said display characteristics is associated with the wireless device (22) based upon said device type.

16. The gateway claimed in any one of claims 11 to 15, **characterised in that** said display capabilities include screen resolution, and wherein said formatting module includes a component for scaling said non-textual element in accordance with said screen resolution.

17. The gateway claimed in any one of claims 11 to 16, **characterised in that** said controller (16) includes a component for identifying that the electronic message includes non-textual elements, and wherein said component for identifying reads a message type identifier within the electronic message (24).

18. The gateway claimed in any of claims 11 to 17, **characterised in that** the electronic message (24) comprises e-mail, and wherein said e-mail comprises HTML or RTF format e-mail.

19. A system for forwarding an electronic message (24) to a wireless device (22) through a wireless network (20), wherein the electronic message (24) is addressed to the wireless device (22), and wherein the system includes a gateway as claimed in any of claims 11 to 18.

20. A wireless communications system including at least one gateway as claimed in any of claims 11 to 18.

21. A machine readable medium comprising program code means executable on a processor of the gateway of any of claims 11 to 18 for implementing the method of any of claims 1 to 10.

## Amended claims

### Amended claims in accordance with Rule 86(2) EPC.

**1.** A method of forwarding an electronic message (24) from a gateway (12) to a wireless device (22) through a wireless network (20), the method comprising the steps of:
receiving the electronic message (24) addressed to the wireless device (22), wherein the electronic message (24) comprises at least one non-textual element;
**characterized in that** the at least one non textual element is contained within the electronic message (24) and the method comprises the steps of,
modifying the electronic message (24) to create a formatted electronic message (26) by modifying said at least one non-textual element contained within the message (24) in accordance with display capabilities of the wireless device; and
forwarding said formatted electronic message (26) containing said at least one modified non textual element to the wireless device (22) over the wireless network (20).

**2.** The method claimed in claim 1, **characterised in that** said step of modifying said at least one non-textual element comprises scaling said at least one non-textual element to reduce its display size and permit display of said at least one modified non-textual element on the wireless device (22).

**3.** The method claimed in claim 1 or claim 2, **characterised in that** said at least one non-textual element comprises an image file.

**4.** The method claimed in any preceding claim, **characterised in that** said display capabilities comprise screen resolution, and wherein said step of modifying comprises scaling said at least one non-textual element in accordance with said screen resolution.

**5.** The method claimed in any preceding claim, **characterised in that** the method further comprises a step of identifying that the electronic message (24) contains within it said at least one non-textual element, wherein said step of identifying comprises reading a message type identifier.

**6.** The method claimed in any of claims 1 to 5, **characterised in that** the electronic message (24) comprises e-mail, and wherein said e-mail comprises HTML or RTF format e-mail.

**7.** The method claimed in any preceding claim, **characterised in that** said step of receiving comprises determining whether the electronic message (24) comprises said at least one non-textual element.

**8.** The method claimed in any preceding claim, **characterised in that** the method further comprises a step of storing said display characteristics associated with the wireless device (22).

**9.** The method claimed in any preceding claim, **characterised in that** the method further comprises a step of storing a device type associated with the wireless device (22) and determining said display characteristics based upon said device type.

**10.** A gateway for forwarding an electronic message (24) to a wireless device (22) through a wireless network (20), wherein the electronic message (24) is addressed to the wireless device (22), the gateway comprising:
means for receiving the electronic message (24) addressed to the wireless device (22), wherein the electronic message (24) comprises at least one non-textual element;
the gateway being **characterized in that**:
the means for receiving is arranged to receive the electronic message (24) with the at least one non textual element being contained within said message (24);
and **in that** the gateway comprises:
a formatting module (18) for modifying the electronic message (24) to create a formatted electronic message (26) by modifying said at least one non-textual element contained within the message (24) in accordance with display capabilities of the wireless device,
wherein said gateway (12) comprises means for forwarding said formatted electronic message (26) containing said at least one modified non textual element to the wireless device (22) over the wireless network (20).

**11.** The gateway claimed in claim 10, **characterised in that** said means for receiving comprises a controller (16) for receiving the electronic message (24) and for identifying that the electronic message (24) contains within it at least one non-textual element.

**12.** The gateway claimed in claim 11, **characterised in that** said component for modifying comprises a component for scaling said at least one non-textual element to reduce its display size and permit display of said at least one modified non-textual element on the wireless device (22).

**13.** The gateway claimed in any of claims 10 to 12, **characterised in that** said at least one non-textual element comprises an image file.

**14.** The gateway claimed in any one of claims 11 to 13, **characterised in that** said gateway (12) stores a device type associated with the wireless device (22) and wherein said information regarding said display characteristics is associated with the wireless device (22) based upon said device type.

**15.** The gateway claimed in any one of claims 10 to 14, **characterised in that** said display capabilities comprise screen resolution, and wherein said formatting module comprises a component for scaling said at least one non-textual element in accordance with said screen resolution.

**16.** The gateway claimed in any one of claims 10 to 15, **characterised in that** said controller (16) comprises a component for identifying that the electronic message comprises non-textual elements, and wherein said component for identifying reads a message type identifier within the electronic message (24).

**17.** The gateway claimed in any of claims 10 to 16, **characterised in that** the electronic message (24) comprises e-mail, and wherein said e-mail comprises HTML or RTF format e-mail.

**18.** A system for forwarding an electronic message (24) to a wireless device (22) through a wireless network (20), wherein the electronic message (24) is addressed to the wireless device (22), and wherein the system comprises a gateway as claimed in any of claims 10 to 17.

**19.** A wireless communications system comprising at least one gateway as claimed in any of claims 10 to 17.

**20.** A machine readable medium comprising program code means executable on a processor of the gateway of any of claims 10 to 17 for implementing the method of any of claims 1 to 9.
